Europäisches Patentamt

European Patent Office

Office européen des brevets

(11) Veröffentlichungsnummer: **0 126 387**
**A1**

## (12) EUROPÄISCHE PATENTANMELDUNG

(21) Anmeldenummer: **84105284.8**

(51) Int. Cl.³: **B 62 D 13/00**

(22) Anmeldetag: **10.05.84**

(30) Priorität: **19.05.83 DE 3318192**
**28.09.83 DE 3335161**
**14.09.83 DE 3333209**

(43) Veröffentlichungstag der Anmeldung: **28.11.84**
**Patentblatt 84/48**

(84) Benannte Vertragsstaaten: **AT BE CH DE FR GB IT LI LU NL SE**

(71) Anmelder: **Hermann Köhler GmbH & Co KG, Daimlerstrasse 9, D-2200 Elmshorn (DE)**

(72) Erfinder: **Naumann, Günter, Holstengang 8, D-2208 Glückstadt (DE)**

(74) Vertreter: **Glawe, Delfs, Moll & Partner Patentanwälte, Rothenbaumchaussee 58 Postfach 2570, D-2000 Hamburg 13 (DE)**

(54) **Lenkanordnung für eine Anhängerachse.**

(57) Lenkanordnung für eine Anhängerachse (7), mit einer Deichsel (12), deren vorderes Ende mit einem Führungspunkt (3) verbunden und frei um diesen einstellbar ist und deren hinteres Ende mit der Anhängerachse über eine Zusatzlenkeinrichtung (7, 8, 9, 15, 19, 27) verbunden ist, die mittels einer Steuereinrichtung abhängig von dem Winkel (16) zwischen der Deichselrichtung (17) und der Geradeausfahrtrichtung (18) (Deichselwinkel) selbsttätig gesteuert ist. Die Zusatzlenkeinrichtung enthält einen motorischen Lenkantrieb (9). Die Steuereinrichtung ist zur Erzeugung eines Lenksignals ausschließlich unterhalb einer vorbestimmten Fahrtgeschwindigkeit eingerichtet, oberhalb welcher die Zusatzlenkeinrichtung in die neutrale Stellung geführt und in dieser Stellung arretiert wird. Ferner kann die Zusatzlenkung abhängig vom Lenkwinkel des Zugfahrzeugs veränderbar sein.

GLAWE, DELFS, MOLL & PARTNER

PATENTANWÄLTE 0126387
ZUGELASSENE VERTRETER BEIM EUROPÄISCHEN PATENTAMT

RICHARD GLAWE
DR.-ING.

KLAUS DELFS
DIPL.-ING.

ULRICH MENGDEHL
DIPL.-CHEM. DR. RER. NAT.

WALTER MOLL
DIPL.-PHYS. DR. RER. NAT.
ÖFF. BEST. DOLMETSCHER

HEINRICH NIEBUHR
DIPL.-PHYS. DR. PHIL. HABIL.

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUM-
CHAUSSEE 58
TEL. (040) 4 10 20 08
TELEX 21 29 21 SPEZ

HAMBURG

Hermann Köhler GmbH & Co KG,
2200 Elmshorn

---

Lenkanordnung für eine
Anhängerachse

---

p 11155/84 EU
D/be

Beschreibung

Die Erfindung bezieht sich auf eine Lenkanordnung für eine
Anhängerachse, mit einer Deichsel, deren vorderes Ende mit
einem Führungspunkt verbunden und frei um diesen einstellbar
ist und deren hinteres Ende mit der Anhängerachse über eine
Zusatzlenkeinrichtung verbunden ist, die mittels einer
Steuereinrichtung abhängig von dem Winkel zwischen der
Deichselrichtung und deren Geradeausfahrtrichtung (Deichselwinkel) selbsttätig gesteuert ist.

Der wichtigste Anwendungsfall der Erfindung betrifft die
Vorderachse mehrachsiger Anhängerfahrzeuge von Straßenlastzügen. Sie ist auch anwendbar bei einachsigen Anhängerfahrzeugen, bei denen die Achse bzw. die Deichsel starr mit dem
Fahrzeugaufbau verbunden ist. Sie ist ferner anwendbar bei
solchen Fahrzeughinterachsen, die über eine Deichsel mit
dem Fahrgestell desselben Fahrzeugs verbunden und gelenkt

...2

0126387

sind sowie bei Sattelanhängern mit lenkbarer Achse bzw. lenkbaren Achsen, wobei der Deichselwinkel im letzteren Fall der Winkel zwischen Auflieger- und Motorwagenlängsachse ist.

Eine durch eine schwenkfest mit ihr verbundene Deichsel gezogene Achse stellt sich bei Kurvenfahrt selbsttätig radial ein, wobei die Längsrichtung der Deichsel von der Längsrichtung des Zugfahrzeugs im Winkel abweicht. Da sich bei diesem Vorgang die Front- und Heckpartien der miteinander verbundenen Fahrzeuge einander nähern, muß ein so großer Kuppelabstand mit entsprechender Deichsellänge eingehalten werden, daß Kollision nicht auftreten kann. Bei einachsigen Anhängerfahrzeugen, die starr mit der Achse verbunden sind, muß die Deichsellänge bis zur Anhängerfront mindestens so groß sein wie die Radiuslänge von der Anhängerkupplung des Zugfahrzeugs bis zu dessen hinteren seitlichen Ecken. Wenn es sich um die lenkbare Vorderachse eines Anhängerfahrzeugs handelt, muß der Kuppelabstand noch größer sein, weil die Deichsellänge zwischen der Anhängerkupplung des Zugfahrzeugs und dem Drehschemelmittelpunkt der Anhängerache größer sein muß als die Summe der Radiusabstände zwischen der Anhängerkupplung und den hinteren Ecken des Zugfahrzeugs einerseits und zwischen dem Drehschemelmittelpunkt und den Vorderecken des Anhängerfahrzeugs andererseits. Zur Verminderung des großen Kuppelabstands, der den in der zulässigen Gesamtlänge des Zuges verfügbaren Stauraum mindert und den Luftwiderstand vergrößert, sind sog. kurzgekuppelte Anhänger entwickelt worden, deren Vorderachsen zur Vermeidung kollidierender Fahrzustände mit mechanischen Übertragungsmitteln vom Rahmenende des Zugfahrzeuges aus gelenkt werden.

Gemäß der DE-OS 30 30 279 ist die Zusatzlenkung als Achsschenkellenkung an dem Drehschemel der Vorderachse angeordnet, die seitenstarr mit der Deichsel verbunden ist. Neben der Deichsel ist eine das Zugfahrzeug und den Drehschemel verbindende Lenkstange vorgesehen, die über ein Hebelgestänge auf die Achsschenkellenkung einwirkt. Wenn bei Kurvenfahrt die Deichselrichtung von der Richtung des Zugfahrzeugs abweicht, wird die im Bereich der Lenkstange sich ereignende Änderung des Abstands zwischen dem Zugfahrzeug und dem Drehschemel zu einer Verstellung der Zusatzlenkung genutzt, und zwar im Sinne einer Vergrößerung des Radius der von den Anhängervorderrädern durchfahrenen Kurve und somit im Sinne einer Verminderung des Deichselwinkels. - Nach der DE-OS 31 21 745 ist die starre Anhängervorderachse über einen zweiten Drehschemel an dem mit der Deichsel verbundenen und in üblicher Weise mit dem Zugfahrzeug gekuppelten Hauptdrehschemel verbunden. Die Winkeleinstellung des zweiten Drehschemels gegenüber dem Hauptdrehschemel erfolgt mittels eines vom Zugfahrzeug seitensteif nach hinten ragenden Lenkers, dessen hinteres Ende mit dem zweiten Drehschemel gelenkig verbunden ist. Auch in diesem Falle bewirkt eine Änderung des Deichselwinkels gegenüber dem Zugfahrzeug gleichzeitig und zwangsweise eine Änderung des Lenkwinkels der Anhängervorderräder gegenüber der Deichselrichtung im Sinne eines größeren Kurvenradius. - Diese bekannten Anordnungen haben den Nachteil, daß die mechanische Steuereinrichtung für die Zusatzlenkeinrichtung ständig im Eingriff ist, hoher Materialbeanspruchung und damit auch Verschleiß unterliegt. Außerdem hat sich gezeigt, daß Anhänger mit derartigen Lenksystemen zu unstabilem Fahrverhalten (wedeln) neigen, weil der zusätzliche lose Drehpunkt zwischen Deichsel und Achse unerwünschtes und durch die Nachgiebigkeit der mechanischen Steuereinrichtung beeinflußtes Spiel aufweist. Der Anhänger läuft unruhig. Auch führen

...4

einseitige Fahrbahnhindernisse, Bremskräfte oder unterschiedliche Reibungskoeffizienten an den Rädern zu ungewollten,
die Unsicherheit erhöhenden Lenkreaktionen. - Schließlich
haben die bekannten Anordnungen den Nachteil, daß sie speziell
passend zureinander gestaltete Zugfahrzeuge und Anhängerfahrzeuge voraussetzen. - Bei der Lenkanordnung nach der
DE-OS 28 08 173, gemäß welcher die Deichsel starr mit dem
Zugfahrzeug verbunden und über nur eine Lenkeinrichtung an
der Anhängerachse angreift, sind diese Nachteile weniger
ausgeprägt; um so stärker fällt die starke Spezialisierung
dieser bekannten Fahrzeuge ins Gewicht, die eine freie Kombination von Anhängern und Zugfahrzeugen ausschließt.

Der Erfindung liegt die Aufgabe zugrunde, eine Lenkanordnung
der eingangs genannten Art zu schaffen, die auf dem Prinzip
der freien Einstellbarkeit der Deichsel um die Anhängerkupplung des Zugfahrzeugs beruht, eine sichere und ruhige
Fahrweise gestattet und auch die Kombination von nicht
spezialisierten Fahrzeugen ermöglicht.

Die erfindungsgemäße Lösung besteht darin, daß die Zusatzlenkeinrichtung einen motorischen Lenkantrieb aufweist und
daß die Steuereinrichtung zum Erzeugen eines Lenksignals
für den Lenkantrieb ausschließlich unterhalb einer vorbestimmten Fahrgeschwindigkeit eingerichtet ist. Zweckmäßigerweise ist die Steuereinrichtung so ausgebildet, daß die
Zusatzlenkeinrichtung beim Überschreiten der vorbestimmten
Fahrtgeschwindigkeit in die neutrale Stellung geführt und
in dieser Stellung arretiert wird.

Einerseits behält die Erfindung das Prinzip bei, daß das Anhängerfahrzeug über die Deichsel gezogen wird, die auch die
Lenkeinstellung der Anhängerachse bestimmt. Daher ist es möglich, sich üblicher Anhängerkupplungssysteme zu bedienen.
Andererseits bewirkt die bei Kurvenfahrt sich einstellende
Winkelabweichung der Deichsel gegenüber ihrer Geradeausfahrtrichtung über die Zusatzlenkeinrichtung eine derartige Verstellung des Winkels zwischen Deichsel und Achse, daß dadurch
(wegen der Richtungsänderung der Achse) die Winkelabweichung
der Deichsel von der Geradeausfahrtrichtung, die im folgenden
als Deichselwinkel bezeichnet wird, zumindest teilweise
kompensiert wird. Das hat zur Folge, daß der Deichselwinkel
bei Kurvenfahrt innerhalb eines kleinen Winkelbereichs gehalten werden kann. Die Deichsel kann also nicht mehr so
weit einschwenken, wie beim Normalanhänger und der Kuppelabstand zwischen den beiden Fahrzeugteilen kann unter den
daraus sich ergebenden geometrischen Voraussetzungen wesentlich reduziert werden.

Ein wesentlicher Vorteil der Erfindung besteht darin, daß
am Zugfahrzeug keine oder nur geringe Anpassungsänderungen
erforderlich sind, da diese nur die Feststellung des Deichselwinkels gegenüber dem Zugfahrzeug betreffen. Beispielsweise
kann es in einfachen Fällen genügen, wenn an der Deichsel
Näherungsfühler angeordnet sind, die ihre Annäherung an die
eine oder die andere Seite des starr mit dem Zugfahrzeug
verbundenen Kupplungsmauls der Anhängerkupplung feststellen;
es sind dann überhaupt keine Änderungen am Zugfahrzeug erforderlich. Wenn hingegen eine Ausführung der Erfindung auch
gewisse spezielle Eigenschaften des Zugfahrzeugs voraussetzt,
bleibt doch der Vorteil erhalten, daß das Anhängerfahrzeug
auch mit solchen Zugfahrzeugen gekuppelt werden kann, die
diese konstruktiven Voraussetzungen nicht aufweisen, wobei
dann allerdings darauf geachtet werden muß, daß keine engen
Kurven gefahren werden, die die Gefahr einer Kollision der beiden Fahrzeuge heraufbeschwören könnten, bzw. die ausziehbar gestaltete Zuggabel auf Maximallänge ausgezogen wird.

Schließlich hat die Erfindung den Vorteil, daß die jeweilige Einstellung der Zusatzlenkeinrichtung als starr betrachtet werden kann, weil der motorische Lenkantrieb praktisch spiel- und elastizitätsfrei ausgeführt werden kann im Gegensatz zu den mechanischen Steuereinrichtungen der bekannten Zusatzlenkeinrichtungen. Wenn die vorbestimmte Fahrtgeschwindigkeit überschritten wird, die beispielsweise bei 45 km/h liegt, findet überhaupt keine Zusatzlenkung mehr statt, so daß die Fahrtcharakteristik identisch ist mit derjenigen der bekannten ausschließlich deichsel-gelenkten Anhängerfahrzeuge. Die Erfindung beruht u.a. auf der Erkenntnis, daß nur bei relativ geringen Fahrtgeschwindigkeiten kleine Kurven durchfahren werden, bei denen Zusatzlenkung erforderlich ist, während bei hohen Fahrtgeschwindigkeiten die Kurvenradien so groß sind, daß von einer Zusatzlenkung abgesehen werden kann.

Nach einem weiteren Merkmal der Erfindung kann die Lenkanordnung mit einer Einrichtung zur Kontrolle wichtiger Funktionseigenschaften ausgerüstet sein, die zum Abschalten der Zusatzlenkeinrichtung eingerichtet ist. Wenn beispielsweise die Lenkanordnung eine elektronische Steuereinheit enthält, kann diese so ausgebildet sein, daß sie sich ständig selbst überprüft. Bei einer Fehlererkennung wird die Zusatzlenkung in winkelneutrale Stellung gebracht, an den Fahrer wird eine Warnmeldung gegeben und die Zusatzlenkeinrichtung wird ausgeschaltet. Der Anhänger ist dann immer noch über die Deichsel lenkbar; der Fahrer muß es nur vermeiden, auf der Fahrt zur Reparaturwerkstatt extrem enge Kurven zu befahren, bei denen sich die Aufbauecken der Fahrzeuge berühren könnten oder er verlängert die ausziehbare Zuggabel. - Desgleichen kann ständig überprüft werden, ob die für den Betrieb der Zusatzlenkung erforderliche Energiequelle zur Verfügung steht, indem beispielsweise bei Druckluftbetrieb in der Vorratsleitung vor dem Luftkessel im Anhänger sich ein Fühler befindet, der bei Druckabfall ein Signal an die Zusatzlenkeinrichtung gibt, demzufolge diese in die winkelneutrale Stellung zurückgeführt und abgeschaltet wird. Dies ist zum einen eine Sicherheitsmaßnahme; zum anderen wird dadurch dafür gesorgt, daß nach dem Abkuppeln des Anhängerfahrzeugs die Zusatzlenkeinrichtung in die winkelneutrale Stellung zurückkehrt, damit das Anhängerfahrzeug auch durch nicht spezialisierte Zugfahrzeuge unter normaler Deichsellenkung bewegt werden kann.

Das Prinzip der Erfindung, daß die Zusatzlenkeinrichtung nach Maßgabe des Deichselwinkels so gesteuert wird, daß der Deichselwinkel in einem eng begrenzten Bereich gehalten wird, kann auf unterschiedliche Weise verwirklicht werden. Bei einer vorteilhaften Ausführungsform ist jedem Deichselwinkel ein vorbestimmter Zusatzlenkwinkel zugeordnet. Diese Zuordnung kann progressiv sein derart, daß bei kleinen Deichselwinkeln nur ein relativ kleiner Zusatzlenkwinkel eingestellt wird, während bei größeren Deichselwinkeln auch relativ größere Zusatzlenkwinkel eingestellt werden. Innerhalb eines engsten Deichselwinkelbereichs braucht keine Zusatzlenkung veranlaßt zu werden

Bei einer sehr zweckmäßigen Ausführungsform der Erfindung findet die Zusatzlenkung so statt, daß der Deichselwinkel bei Kurvenfahrt zwischen einem vorbestimmten höheren und einem vorbestimmten geringeren Deichselwinkelwert gehalten wird. Ein erster Zusatzlenkimpuls erfolgt dann, wenn der höhere Deichselwinkelwert überschritten wird, und zwar in solcher Weise, daß der Deichselwinkel zwischen die beiden
genannten Winkelwerte zurückgeführt wird. Unterschreitet
der Deichselwinkel beim Herausfahren aus der Kurve den geringeren der beiden Deichselwinkelwerte wieder, so wird der
Zusatzlenkwinkel wieder zurückgestellt, und zwar zunächst
wiederum so, daß der Deichselwinkel stets zwischen den beiden
Winkelwerten verbleibt, bis der Zusatzlenkwinkel gänzlich
auf Null zurückgestellt ist.

Nach einem weiteren Merkmal der Erfindung kann vorgesehen
sein, daß die genannten Deichselwinkelwerte mit zunehmender
Geschwindigkeit angehoben werden. Beispielsweise betragen
sie bei einer Fahrtgeschwindigkeit bis 10 km/h 6° bzw. 9°
und verschieben sich bei steigender Geschwindigkeit bis auf
15° bzw. 18° bei 45 km/h. Dies hat zur Folge, daß bei
höheren Geschwindigkeiten, wenn die Wahrscheinlichkeit enger
Kurven geringer wird, die Zusatzlenkeinrichtung immer seltener
anspricht, bis sie schließlich bei 45 km/h gänzlich abgeschaltet werden kann.

Dabei kann vorgesehen sein, daß jedem Erreichen eines vorbestimmten Deichselwinkels ein vorbestimmter Änderungsbetrag
zum Zusatzlenkwinkel zugeordnet ist. Dies kann dadurch verwirklicht werden, daß für den motorischen Antrieb der Zusatzlenkeinrichtung ein Gerät mit konstanter Geschwindigkeit gewählt und dem Erreichen eines vorbestimmten Deichselwinkels
eine vorbestimmte Antriebslaufdauer zugeordnet wird. Der
Änderungsbetrag wird so groß gewählt, daß er in der Regel
auch bei starken Deichselwinkeländerungen dazu ausreicht,
diesen in den vorgegebenen Winkelwertbereich zurückzuführen.
Zweckmäßigerweise ist eine strecken- oder zeitabhängige
Wiederholungsabfrage vorgesehen, so daß ein neuer Zusatzlenkimpuls dann erfolgt, wenn nach dieser Strecke bzw. Zeit-

...9

periode der größere der beiden Winkelwerte noch oder wieder
überschritten sein sollte. Statt dessen oder zusätzlich kann
eine progressiv wirkende Zusatzlenkcharakteristik vorgesehen
werden, indem einer Folge von bestimmten Deichselwinkelwerten
entsprechend abgestufte Änderungsbeträge zum Zusatzlenkwinkel zugeordnet sind. Wenn nach dem obigen Beispiel der
Deichselwinkel zwischen 6° und 9° gehalten werden soll,
könnte beispielsweise einem Deichselwinkelwert von 12° ein
entsprechend stärkerer Zusatzlenkimpuls zugeordnet sein.
Statt dessen ist es aber meist zweckmäßiger, beim Erreichen
dieses hohen Deichselwinkelwerts eine ständige Vergrößerung
des Zusatzlenkwinkels vorzusehen, bis der Deichselwinkel
wieder in dem angestrebten Winkelbereich liegt. Nach den bekannten Grundsätzen der Regelungstechnik können derartige
Einrichtungen auch mit Rückkopplungssystemen versehen sein,
um die Regelcharakteristik zu glätten.

Nach einem weiteren Merkmal der Erfindung kann auch die
Deichselwinkelgeschwindigkeit der Verstellung des Zusatzlenkwinkels zugrunde gelegt werden oder korrigierend
(beispielsweise für eine Rückführung) einwirken, und zwar
unter dem Gesichtspunkt, daß bei einer raschen Änderung der
Deichselrichtung eine starke Richtungsänderung zu erwarten
ist und deshalb ein großer Zusatzlenkwinkel angemessen
erscheint, und umgekehrt.

Damit die Steuereinrichtung nicht zu häufig ansprechen muß
und um ggf. auch eine Stabilisierung der Zusatzlenkfunktion
zu erreichen, ist es zweckmäßig, die Nachstellung der Zusatzlenkeinrichtung diskontinuierlich in vorbestimmten Zeit- oder
Streckenabständen wiederholt durchzuführen. Wenn die Wiederholung streckenabhängig ist, können diese Strecken geschwindigkeitsabhängig in dem Sinne variabel sein, daß sie bei geringer Geschwindigkeit kleiner sind als bei größeren. Bei geringen
Geschwindigkeiten ist nämlich, beispielsweise im Rangierbetrieb, eher mit rasch sich ändernden Lenkeinstellungen
zu rechnen, als bei größeren Geschwindigkeiten. Die
Strecken zwischen aufeinanderfolgenden Lenkfunktionen liegen
zweckmäßigerweise in der Größenordnung von 1/10 bis 1/2
Radumdrehung bei geringer Geschwindigkeit und zwischen
1/2 und 3 Radumdrehungen bei höherer Geschwindigkeit, wobei
die Grenze zwischen diesen beiden Geschwindigkeitsbereichen
vorzugsweise zwischen 2 und 8 km/h liegt. Es kann auch eine
feinere Abstufung oder ein kontinuierlicher Übergang vorgesehen sein.

Nach einem weiteren Merkmal der Erfindung kann eine Einrichtung zum Feststellen des Deichselwinkels gegenüber der
Anhängerlängsrichtung vorgesehen sein und ist die Zusatzlenkung in winkelneutraler Stellung abgeschaltet, solange
dieser Winkel unterhalb eines bestimmten Betrags von beispielsweise 5° bis 12° liegt.

Vorzugsweise ist vorgesehen, daß bei Rückwärtsfahrt die
Zusatzlenkeinrichtung abgeschaltet ist, und zwar zweckmäßigerweise in derjenigen Stellung, die sie bei Beginn der
Rückwärtsfahrt gerade inne hatte oder in neutraler Stellung.
Das Fahrverhalten wird dann nur durch die Deichsellenkungscharakteristik bestimmt.

Nach einem besonderen Merkmal der Erfindung kann die Zusatzlenkeinrichtung manuell verstellbar sein, wobei die Handhabe
zum manuellen Verstellen der Zusatzlenkeinrichtung zweckmäßigerweise am Führerstand vorgesehen ist. Dem Fahrer werden
dadurch vielfältige Manövriermöglichkeiten eröffnet. Aus
Sicherheitsgründen soll die manuelle Verstellbarkeit der Zusatzlenkeinrichtung oberhalb einer vorbestimmten Geschwindigkeit selbsttätig abgeschaltet sein, beispielsweise bei
einer Fahrtgeschwindigkeit oberhalb 5 km/h. Dann übernimmt
die Automatik wieder die Kontrolle über die Lenkung. Das
Umschalten auf manuellen Betrieb soll nur im Stand möglich
sein.

Die Erfindung ist sowohl bei Drehschemellenkung als auch bei
Achsschenkellenkung anwendbar. Bei Drehschemellenkung ist
die Deichsel schwenkbeweglich mit einem die Achse haltenden
Drehschemel verbunden und ist die Zusatzlenkung zur Einstellung der Deichsel gegenüber dem Drehschemel ausgebildet.

Im anderen Falle ist die Deichsel schwenkstarr mit einem
Drehschemel verbunden und ist die Zusatzlenkung als Achsschenkellenkung für die am Drehschemel angeordneten Räder
ausgebildet. Wenn es sich um ein einachsiges Anhängerfahrzeug
bzw. um eine hintere Lenkachse handelt, so tritt an die Stelle
des Drehschemels das entsprechende Fahrgestell.

Geräte, die sich für die Durchführung der erläuterten Funktionen eignen, befinden sich frei zugänglich im Handel.
Beispielsweise können für die Feststellung des Deichselwinkels Näherungsschalter an der Deichsel angeordnet sein, die
mit dem Kupplungsmaul der Anhängerkupplung des Zugwagens
zusammenwirken und ein Signal dann abgeben, wenn sie bei
dem vorbestimmten Winkel sich auf der einen oder anderen
Seite der Wand oder dem Rand des Kupplungsmauls entsprechend
genähert haben. Eine andere Ausführungsmöglichkeit besteht
darin, daß ein Drehwinkelgeber verwendet wird, der fest an
der Deichsel angeordnet ist und dessen Meßwelle über geeignete Kupplungseinrichtungen, wie beispielsweise Seile, mit dem Zugfahrzeug derart verbunden werden kann, daß die Schwenkung der Deichsel in bezug auf das Zugfahrzeug zu einer Verdrehung der Welle führt. Der Winkelgeber sendet ständig oder auf Abfrage ein den gemessenen Winkel repräsentierendes Signal zu einer Steuereinheit aus, die diejenigen Winkelwerte erkennt, bei denen bestimmte Zusatzlenkmaßnahmen von ihr zu veranlassen sind. Die Steuereinheit ist zweckmäßigerweise elektronischer Natur, kann aber selbstverständlich auch beispielsweise pneumatisch oder elektrisch-analog etc. aufgebaut sein. Dem Steuerungstechniker sind Anordnungen ohne weiteres geläufig, die zur Durchführung der erläuterten Funktionen geeignet sind.

Wenn man die für die Lenkgeometrie maßgebenden Verhältnisse, nämlich Achsstand, Überhang, Deichsellänge etc. kennt, ist es möglich, diejenigen Zusatzlenkwinkelbeträge zu bestimmen, die jedem Lenkwinkel des Zugfahrzeugs durch die Steuereinrichtung zugeordnet werden müssen, damit die Deichsel ihre mit der Längsrichtung des Zugfahrzeugs übereinstimmende Stellung beibehält. Nach einem weiteren Merkmal der Erfindung ist daher vorgesehen, daß die Zusatzlenkeinrichtung auch abhängig von dem Lenkwinkel des Zugfahrzeugs veränderbar ist.

Mittels eines geeigneten Rechners und Servogeräten für die Einstellung des Zusatzlenkwinkels läßt sich dieses Ziel erreichen, wobei gewisse Abweichungen von der theoretischen Genauigkeit zugelassen werden können. Es ist bei normalem Fahrtablauf auch nicht damit zu rechnen, daß sich Zusatzlenkfehler über längere Zeiträume zu einem unzulässig großen Fehler summieren könnten, weil im normalen Fahrtablauf ständig Geradeausfahrtzustände eintreten, in denen die für die Bestimmung des Zusatzwinkels maßgebenden Steuereinrichtungen auf den der Geradeausfahrt entsprechenden Nullzustand zurückgeführt werden können.

Der Sicherheit halber kann es sich jedoch empfehlen, die gewünschte Einhaltung der Deichselrichtung durch eine gesonderte Winkelfühleinrichtung festzustellen und korrigierend auf die Zusatzlenkeinrichtung einwirken zu lassen, wenn die Deichselrichtung von der Richtung des Zugfahrzeugs um einen vorbestimmten Grenzbetrag in der einen oder anderen Richtung abweicht. Der vom Lenkwinkel abhängigen Zusatzlenkwinkeleinstellung wird dann einfach ein entsprechender Korrekturbetrag überlagert, der - unabhängig von der jeweiligen geometrischen Einstellung der Fahrzeugkomponenten zueinander - die Rückführung der Deichsel etwa in Zugfahrzeugrichtung gewährleistet.

Die erfindungsgemäße Einstellung des Zusatzlenkwinkels abhängig vom Lenkwinkel des Zugfahrzeugs kann unabhängig von oder zusätzlich zu sämtlichen oben erläuterten, vom Deichselwinkel abhängigen Maßnahmen angewendet werden. Die Anordnung nach jener Anmeldung kann auch teilweise durch die erfindungsgemäße ersetzt werden.

Im allgemeinen wird es zweckmäßig sein, den Lenkwinkel des Zugfahrzeugs an den Lenkorganen desselben abzunehmen. Eine andere Ermittlung des Lenkwinkels oder eines diesem entsprechenden Wertes schließt die Erfindung jedoch nicht aus. so könnte beispielsweise durch einen die Straßenoberfläche abtastenden optischen Sensor, der die Richtung der Straßenrelativbewegung zum Fahrzeug mit dessen Längsrichtung vergleicht, ein den Lenkwinkel repräsentierendes Signal erzeugt werden.

Es ist in der Praxis nicht erforderlich, den jeweiligen Zusatzlenkwinkel in größtmöglicher Annäherung an den theoretischen Sollwert zu berechnen. Vielmehr sind vereinfachende Annahmen möglich. Beispielsweise kann man in einem einfachsten Ausführungfall die Zusatzlenkwinkel stets etwa proportional dem Lenkwinkel des Zugfahrzeugs einstellen, wodurch in den meisten Fahrzuständen etwa die gewünschte Übereinstimmung der Deichselrichtung mit der Längsrichtung des Zugfahrzeugs eingehalten werden kann. Unter ungewöhnlichen Fahrzuständen sorgt die Kontrolle des Deichselwinkels gegenüber der Richtung des Zugfahrzeugs dafür, daß notfalls eine Korrektur des Zusatzlenkwinkels erfolgen kann.

Unterschiedliche Maße des Zugfahrzeugs (Radstand, Abstand zwischen der Anhängerkupplung und der Hinterachse des Zugfahrzeugs) können die theoretische Solleinstellung des Zusatzlenkwinkels beeinflussen. In vielen Fällen wird es nicht notwenig sein, diese Unterschiede im Rechner zu berücksichtigen, weil jedenfalls die Tendenz in der Zusatzlenkung, die Deichselrichtung in Zugfahrzeugrichtung zu halten, beibehalten bleibt und lediglich die in Kauf zu nehmenden Abweichungstoleranzen größer oder kleiner sein können. Jedoch ist es möglich, den unterschiedlichen Geometrien durch unterschiedliche Einstellbarkeit des Rechners Rechnung zu tragen. Beispielsweise können bei einem Zugfahrzeug mit Liftachse, bei dem die Länge des Überhangs und der Radstand davon abhängen, ob die zweite Achse angehoben ist oder nicht, Mittel zur automatischen Feststellung dieses Zustands vorgesehen sein, die auf die Steuereinrichtung der Zusatzlenkung so einwirken, daß in jedem Fall die zutreffende Lenkgeometrie im Rechner dem Steuerungsvorgang zugrunde gelegt wird.

Um den Steuerungsaufwand zu senken, kann vorgesehen sein, daß die Zusatzlenkung auf die Fälle beträchtlichen Lenkeinschlag beschränkt wird. Solange der Lenkeinschlag gering ist, ist nicht mit einem Fahrzustand zu rechnen, in welchem die Ecken der Fahrzeugaufbauten einander berühren könnten. Es kann deshalb eine stärkere Abweichung der Deichselrichtung von der Längsrichtung des Zugfahrzeugs in Kauf genommen werden. Wenn hingegen größere Lenkeinschläge auftreten, ist ein solcher Berührungsfall eher wahrscheinlich, so daß genauer darauf geachtet werden muß, daß die Deichsel die Übereinstimmung mit der Längsrichtung des Zugfahrzeugs behält. Auf Grund dieser Überlegungen kann die Steuereinrichtung erfindungsgemäß so ausgestaltet sein, daß unterhalb eines bestimmten Lenkwinkelwerts überhaupt keine Zusatzlenkung stattfindet, beispielsweise innerhalb eines Winkelbereichs von $\pm$ 5 bis 12°. Erst wenn dieser Grenzwert überschritten wird, folgt eine Zusatzlenkung. Diese Zusatzlenkung kann dann beispielsweise in ihrem Betrag in einem Ausführungsfall proportional dem Lenkwinkel sein. Statt dessen kann unter dem Gesichtspunkt, daß das Ausmaß der Zusatzlenkung stets so klein bleiben soll, wie dies mit Rücksicht auf die Vermeidung der Fahrzeugberührung statthaft ist, so ausgestaltet sein, daß bei kleineren Lenkwinkeln (gegebenenfalls oberhalb des genannten Grenzwerts) nur relativ kleinere Zusatzlenkwinkel vorgegeben werden, die lediglich eine Annäherung der Deichselrichtung an die Längsrichtung des Zugfahrzeugs bringen, ohne eine vollständige Kompensierung zu erreichen, während erst bei großen Lenkwinkeln die zugehörigen Zusatzlenkwinkelbeträge so groß gewählt sind, daß eine Rückführung der Deichselrichtung etwa in Längsrichtung des Zugfahrzeugs erreicht wird. Dies führt zu einer progressiven Abhängigkeit des Zusatzlenkwinkels vom Lenkwinkel des Zugfahrzeugs.

Die Erfindung wird im folgenden näher unter Bezugnahme auf die Zeichnung erläutert, die zwei Ausführungsbeispiele schematisch veranschaulicht. Es zeigen:

Fig. 1          die schematische Darstellung des hinteren Teils eines Zugfahrzeugs und des vorderen Teils eines Anhängerfahrzeugs mit Achsschenkellenkung an der Anhängerachse und

Fig. 2          eine entsprechende Darstellung einer Ausführung mit Drehschemellenkung.

Am Rahmen 1 des Zugfahrzeugs 2 befindet sich die Anhängerkupplung mit Kupplungsbolzen 3 und Kupplungsmaul 4.

Das Anhängerfahrzeug 5 hat lenkbare Vorderräder 6 mit Achsen 7. Bei diesem Ausführungsbeispiel sind diese Achsen 7 gemeint, wenn im Zusammenhang der Erfindung von "der Achse" gesprochen wird. Die Achsen 7 sind mit den zugehörigen Achsschenkeln 8, die von hydraulischen Zylindern 9 verstellbar sind, an der Lenkachse 10 angeordnet, die ihrerseits von einem Drehschemel 11 gehalten ist, der starr gegenüber seitlicher Verschwenkung mit der Deichsel 12 verbunden ist und gegenüber dem Fahrzeugaufbau um seinen Mittelpunkt 13 beispielsweise über Vermittlung eines Kugeldrehkranzes 14 drehbar ist.

An der Deichsel sind innerhalb des Wirkungsbereichs des Kupplungsmauls 4 zu beiden Seiten Näherungsschalter 15 vorgesehen, die durch Zusammenwirken mit dem Kupplungsmaul bei vorbestimmten Winkelabweichungen 16 der Deichselrichtung 17 von der Richtung 18 des Zugfahrzeugs Impulse abgeben, die einer Steuereinheit 19 zugeführt werden. An der Spurstange 20 bzw. am Drehschemel 11 ist ein Näherungsschalter 21 angeordnet, der ein Signal dann abgibt, wenn die Räder 6 sich im Verhältnis zur Deichsel 12 in Geradeausfahrtrichtung (winkelneutrale Stellung) befinden, das ebenfalls der Steuereinheit 19 zugeführt wird.

Am Drehschemel 10 und am Aufbau des Anhängerfahrzeugs 5 sind Näherungsschalter 22 vorgesehen, die ein Signal an die Steuereinheit 19 geben, sobald die Deichselrichtung 17 mit der Längsrichtung 23 des Anhängerfahrzeugs einen Winkel 24 zur einen oder anderen Seite von mindestens 10° bildet.

An einem Anhängerrad ist ein Zahnrad oder Polrad 25 angeordnet, das mit einem Näherungsschalter 26 zusammenwirkt, dessen die Fahrtgeschwindigkeit und Fahrtrichtung anzeigendes Signal der Steuereinheit 19 zugeführt ist.

An geeigneter Stelle ist eine Motorpumpe 27 vorgesehen, die so geschaltet ist, daß sie auf entsprechende Steuersignale der Steuereinheit 19 hin den Zylindern 9 Hydraulikflüssigkeit in der einen oder anderen Bewegungsrichtung zuführt. Wenn sie von der Steuereinheit 19 kein Steuersignal erhält, sind die Hydraulikleitungen geschlossen und die zugehörigen Kolben in derjenigen Stellung hydraulisch verriegelt, in der sie sich gerade befinden. Damit ist auch die Lenkeinstellung der Räder 6 im Verhältnis zum Drehschemel 11 arretiert.

Die Zusatzlenkeinrichtung wird in Funktionsbereitschaft geschaltet, wenn der Näherungsschalter 10 der Steuereinheit 19 eine über Null liegende Fahrtgeschwindigkeit signalisiert. Beim Erreichen einer Geschwindigkeit von 45 km/h wird die Zusatzlenkung wieder ausgeschaltet, nachdem zuvor die Räder wieder in winkelneutrale Lenkstellung gegenüber dem Drehschemel 11 gebracht wurden, und die Zusatzlenkung wird mechanisch verriegelt.

Die von von den Näherungsschaltern 15 gebildete Winkelmeßeinrichtung ist so ausgestaltet, daß sie feststellt, nach
welcher Seite die Deichsel von der Geradeausfahrtrichtung
abweicht. Die Steuereinheit wird dadurch in die Lage versetzt, zu entscheiden, nach welcher Seite Lenkimpulse auftreten dürfen.

Tritt bei Funktionsbereitschaft der Zusatzlenkeinrichtung
bei Vorwärtsfahrt mit weniger als 25 km/h infolge einer
Kurvenfahrt eine langsame Abweichung der Deichselrichtung 17
von der Richtung 18 des Zugfahrzeugs um einen Winkel von
mehr als 9° auf, so wird dies der Steuereinheit 19 durch
den Näherungsschalter 15 angezeigt. Diese gibt dann einen
Lenkimpuls an die Motorpumpe 27, die daraufhin durch Einschaltung von vorbestimmter Dauer einen Lenkimpuls von
vorbestimmten Winkelbetrag an die Achsen 7 gibt, und zwar
in solchem Sinne, daß die Räder zur Kurvenaußenseite hin
einschlagen. Dadurch läuft der Anhänger nach außen und dreht
die Deichsel 12 im Verhältnis der Richtung des Zugfahrzeugs
zurück. Gleichzeitig läuft ein Wegstreckenzähler an. Nach
Durchfahren einer Wegstrecke von vorzugsweise 0,5 Radumdrehungen
wird erneut festgestellt, ob der Deichselwinkel sich noch
oberhalb des eingestellten Betrags befindet, und es wird
bei Bedarf ein weiterer Lenkimpuls gegeben, usw. Die Zusatzlenkung erfolgt dabei in solcher Weise, daß der Deichselwinkel in einem Bereich von 6° bis 9° gehalten wird.

Wenn hingegen nach erstmaligem Lenken (die Deichsel hat die
mit der Längsrichtung des Zugfahrzeugs gleichgerichtete
Stellung verlassen) der Deichselwinkel 0° erreicht oder
darüber hinaus zur Gegenseite einschwenkt, so wird dies
als unregelmäßiges Fahrverhalten gewertet, und die Motorpumpe wird zu Dauerpumpen veranlaßt, bis die Deichsel die Nullstellung wieder erreicht oder überschritten hat.

Immer dann, wenn die Nullstellung der Deichsel erreicht ist, fängt ein neuer Lenkzyklus an, d.h. erstmaliges Lenken nur bei Überschreiten eines Deichselwinkels von 9°.

Die erläuterte Impulslenkung, durch die der Deichselwinkel bei Kurvenfahrt zwischen 6° und 9° gehalten werden soll, findet nur bei langsamen Deichselwinkeländerungen statt. Wenn der Deichselwinkelbereich von 6° bis 9° hingegen schnell, d.h. innerhalb einer kurzen Fahrstrecke von beispielsweise 0,3 Radumdrehungen, zurückgelegt wird, wird die Motorpumpe zum Dauerpumpen veranlaßt, bis der Deichselwinkel wieder innerhalb des Bereichs von 6° bis 9° liegt. Dies gilt nicht nur dann, wenn der Deichselwinkel dem besagten Bereich in wachsendem Sinne durchstreicht, sondern auch dann, wenn der Winkel sich in diesem Bereich rasch vermindert.

Wenn die Fahrtgeschwindigkeit über 25 km/h liegt, wird eine erstmalige Zusatzlenkfunktion erst dann ausgelöst, wenn der Deichselwinkel 12° überschreitet. Dann setzt Dauerpumpen ein, bis der Deichselwinkel wieder unterhalb von 12° liegt. Anschließend erfolgt ein kleiner Lenkimpuls mit Wegstreckenabfrage und Lenken in den Grenzen von 6° bis 9°, wie es oben für den Fall geringerer Fahrgeschwindigkeiten beschrieben wurde.

Ein neuer Lenkzyklus fängt immer erst dann wieder an, wenn zuvor die Nullstellung der Deichsel erreicht wurde, nämlich bei Geschwindigkeiten unter 25 km/h beim Erreichen des Deichselwinkels von 9° und darüber beim Deichselwinkel von 12°.

Wenn die Motorpumpe abgeschaltet ist, wird gleichzeitig
das zugehörige elektro-hydraulische Schaltventil stromlos,
wodurch die hydraulischen Wege gesperrt und die Steuerzylinder in ihrer jeweiligen Lage arretiert werden.

Die Steuerfunktion kann noch weiter durch Berücksichtigung
des Winkels 24 zwischen der Deichselrichtung 17 und der
Anhängerrichtung 23 verfeinert werden, beispielsweise in
solcher Form, daß eine Zusatzlenkfunktion nur dann eingeleitet wird, wenn dieser Winkel größer als 10° ist.

Wenn der Schalter 26 eine Fahrtgeschwindigkeit über 45 km/h
signalisiert, wird die Zusatzlenkeinrichtung ausgschaltet
und die Deichsel mechanisch am Drehgestell arretiert. Zuvor
wird die Geradeausstellung der Räder an dem Spurstangennäherungsschalter 21 überprüft und, wenn nötig, korrigiert.
Das gleiche geschieht auch, wenn die Näherungsschalter 15
in der Anhängerkupplung die Null-Lage signalisieren (also
eine Stellung innerhalb ihrer kleinsten Aktivierungswinkel).

Schließlich wird die Zusatzlenkung auch dann ausgeschaltet,
nachdem die Räder in Geradeausstellung gebracht wurden,
wenn bei der sich ständig wiederholenden Selbstüberprüfung
der Regelelektronik sowie der anderen funktionell wichtigen
Teile der Zusatzlenkung ein Fehler erkannt wurde. Die Räder
werden dann in die winkelneutrale Stellung gebracht und eine
Warnmeldung an den Fahrer gegeben. Es kann in diesem Zusammenhang vorgesehen sein, daß die Steuereinheit 19 durch Auswertung der Winkel 18 und 24 und/oder durch Auswertung der
zuvor gegebenen Lenkimpulse ständig oder erst beim Eingehen
eines Abschaltsignals feststellt, ob bei Geradeausstellung
der Räder 6 eine Berührung der Aufbauten des Zugfahrzeugs
und des Anhängers zustande käme und im Falle einer Abschaltung die Geradeausstellung der Räder in einem solchen Fall nur
dann oder nur insoweit vornimmt, daß eine solche Berührung
nicht stattfindet. Statt dessen kann auch vorgesehen sein,
daß die Räderrückstellung bei Abschaltung der Zusatzlenkung
so langsam vor sich geht, daß der Fahrer nach dem Vernehmen
der entsprechenden Warnmeldung hinreichend Zeit hat, um den
Zug in eine solche Stellung zu bringen, daß die Fahrzeuge
sich nach der Rückstellung der Räder nicht berühren können.

Bei Rückwärtsfahrt wird der Zusatzlenkwinkel auf Null gebracht und dort belassen. Eine weitere Zusatzlenkung findet
nicht statt. Der Anhänger verhält sich dadurch bei Rückwärtsfahrt wie ein Normalanhänger ohne Zusatzlenkung. Dieses
Prinzip kann dadurch modifiziert werden, daß die Steuereinheit anhand der bei ihr eingehenden Signale von den
Winkeln 16 und 24 einen gefährlichen Fahrtzustand erkennt,
in welchem die Aufbauten der beiden Fahrzeuge aneinander
anstoßen könnten, und dann ein entsprechendes Signal an den
Fahrer gibt oder in einem solchen Augenblick doch eine
Zusatzlenkfunktion veranlaßt.

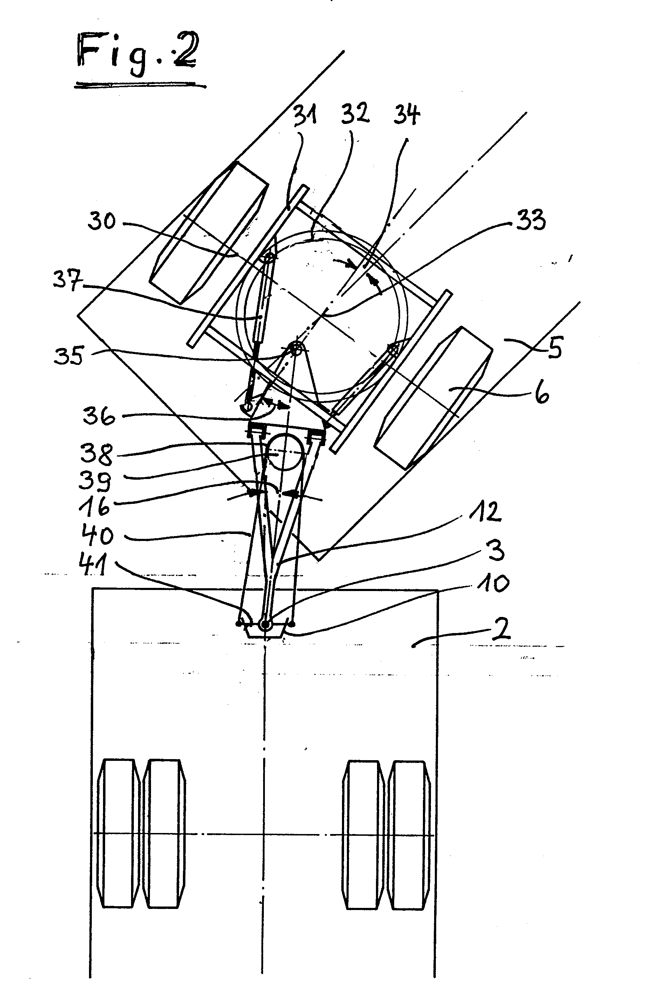

Im Ausführungsbeispiel gemäß Fig. 2 erkennt man ein Zugfahrzeug 2 und ein Anhängerfahrzeug 5 mit Rädern 6, die
über eine Deichsel 12 miteinander verbunden sind, die am
Kupplungsbolzen 3 im Kupplungsmaul 10 angreift. Die Achse 30
der Räder 6 ist über Federn starr mit dem Drehschemel 31
verbunden, der am Aufbau des Anhängerfahrzeugs 5 mittels
des Drehkranzes 32 drehbar um den Mittelpunkt 33 angeordnet
ist. Die jeweilige Stellung des Drehschemels gegenüber dem
Anhänger wird durch den Winkel 34 gekennzeichnet, um den
die Längsachse des Drehschemels 31 von der Längsachse des
Anhängerfahrzeugs 5 abweicht.

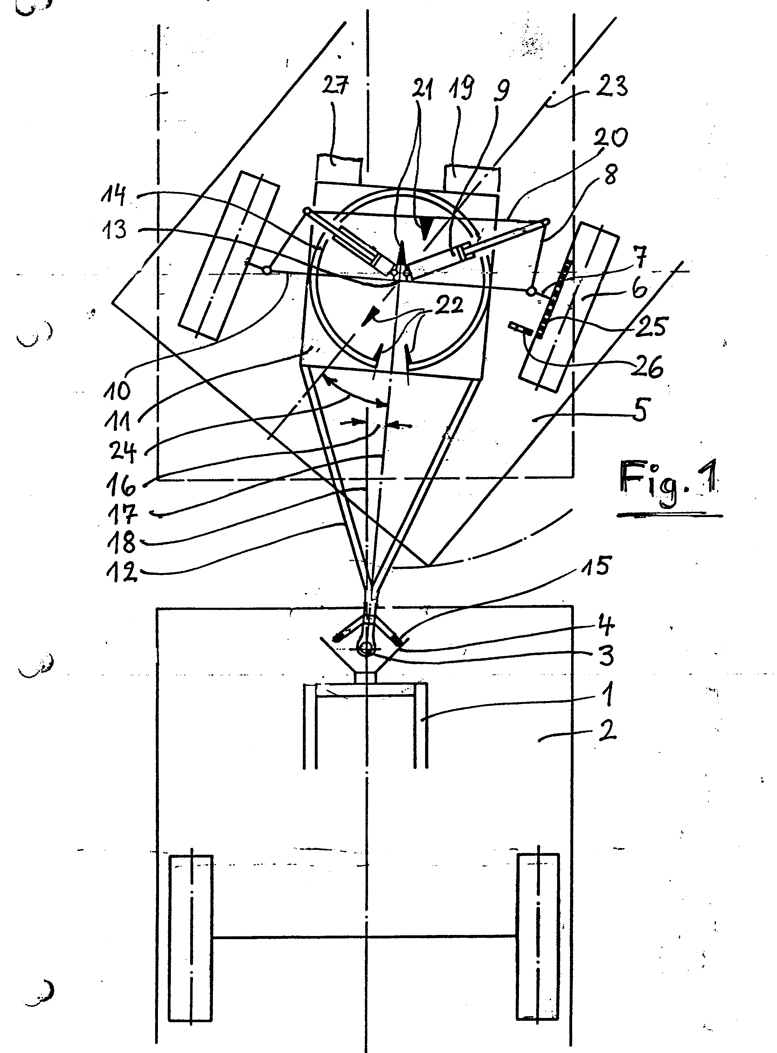

In dem vor dem Drehschemelmittelpunkt 33 gelegenen Schwenkpunkt 35 ist die Deichsel 12 seitlich verschwenkbar mit dem Drehschemel 31 verbunden. Ihre jeweilige Stellung, die durch den Schwenkwinkel 36 zwischen ihrer Längsrichtung und derjenigen des Drehschemels 31 gekennzeichnet ist, wird durch zwei Kolbenzylindereinrichtungen 37 bestimmt, die hydraulisch betrieben werden und in ihrer jeweiligen Einstellung starr fixiert sind, so daß die Deichsel 12 zwar verstellbar ist gegenüber dem Drehschemel, in der jeweiligen Einstellung aber schwenkfest mit ihm verbunden ist. Die Winkeleinstellung der Deichsel 12 gegenüber der Längsrichtung des Anhängerfahrzeugs 5 ist durch die Summe der Winkel 34 und 36 gekennzeichnet. Zur Feststellung beider Winkelbeträge sind geeignete, in der Darstellung nicht erscheinende Fühler vorgesehen. Dabei kann es sich, wie auch im zuvor erläuterten Beispiel um Fühler handeln, die das Erreichen bestimmter Winkelbeträge signalisieren. Statt dessen kann selbstverständlich auch der absolute Winkelbetrag ständig gemessen und durch analoge oder digitale Signale an die Steuereinheit (19 in Fig. 1) weitergegeben werden, wobei diejenigen Winkelwerte, bei denen irgendwelche Steuerungsmaßnahmen zu treffen sind, von der Steuereinheit selbst bestimmt sind bzw. an dieser einstellbar sind.

Zur Messung des Deichselwinkels 16, also des Winkels zwischen
der Längsrichtung der Deichsel und der Längsrichtung des
Zugfahrzeugs 2, ist ein Winkelgeber 38 vorgesehen, der mit
der Deichsel 12 fest verbunden ist und dessen vertikale
Welle eine Scheibe 39 trägt, über die ein Drahtseil 40 läuft,
dessen Enden in gleichem Abstand beiderseits des Kupplungszapfens 3 am Zugfahrzeug 2 befestigt sind. Ihre Verbindung
mit dem Zugfahrzeug wird durch einen Federstab 41 vermittelt,
mit dessen Enden die Drahtseilenden verbunden sind und der
etwaige Maßtoleranzen und Relativbewegungen federnd ausgleicht.
Aus der in der Fig. schematisch dargestellten geometrischen
Anordnungen ergibt sich ohne weiteres, daß im Falle einer
Verschwenkung der Deichsel 12 gegenüber der Längsrichtung des
Zugfahrzeugs 2 eine Drehung der Scheibe 39 des Gebers 38
auftritt, so daß das von dem Geber 38 an die Steuereinheit
(19 in Fig. 1) abgegebene Signal repräsentativ ist für den
Deichselwinkel 16.

Mit dieser Anordnung läßt sich dieselbe Steuerung verbinden,
die im Zusammenhang mit Fig. 1 erläutert wurde. Außerdem sind
bei beiden Anordnungen die Steuerungen verwendbar, die - über
das zuvor erläuterte Ausführungsbeispiel hinausgehend - in der
Beschreibungseinleitung erwähnt wurden.

Patentansprüche

1. Lenkanordnung für eine Anhängerachse (7,30) mit einer Deichsel (12), deren vorderes Ende mit einem Führungspunkt (3) verbunden und frei um diesen einstellbar ist und deren hinteres Ende mit der Anhängerachse (7,30) über eine Zusatzlenkeinrichtung (7,8,9,15,19,27; 35,37,38) verbunden ist, die mittels einer Steuereinrichtung abhängig von dem Winkel (16) zwischen der Deichselrichtung (17) und der Geradeausfahrtrichtung (18) selbsttätig steuerbar ist, dadurch gekennzeichnet, daß die Zusatzlenkeinrichtung einen motorischen Lenkantrieb (27,37) aufweist und daß die Steuereinrichtung zur Erzeugung eines Lenksignals ausschließlich unterhalb einer vorbestimmten Fahrtgeschwindigkeit eingerichtet ist.

2. Lenkanordnung nach Anspruch 1, dadurch gekennzeichnet, daß der Lenkantrieb und die Steuereinrichtung so ausgebildet sind, daß die Zusatzlenkeinrichtung beim Überschreiten der vorbestimmten Fahrtgeschwindigkeit in die neutrale Stellung geführt und in dieser Stellung arretiert wird.

3. Lenkanordnung nach Anspruch 1 oder 2, dadurch gekennzeichnet, daß sie mit einer Einrichtung zur Kontrolle wichtiger Funktionseingenschaften ausgerüstet ist, die zum Abschalten der Zusatzlenkeinrichtung bei Fehlererkennung eingerichtet ist.

4. Lenkanordnung nach einem der Ansprüche 1 bis 3, dadurch gekennzeichnet, daß jedem Deichselwinkel (16) ein vorbestimmter Zusatzlenkwinkel (36) zugeordnet ist.

5. Lenkanordnung nach einem der Ansprüche 1 bis 3, dadurch gekennzeichnet, daß jedem Erreichen eines vorbestimmten Deichselwinkelwerts ein vorbestimmter Änderungsbetrag zum Zusatzlenkwinkel (36) zugeordnet ist.

6. Lenkanordnung nach Anspruch 5, dadurch gekennzeichnet, daß der motorische Antrieb (27) der Zusatzlenkeinrichtung eine konstante Geschwindigkeit hat und dem Erreichen eines vorbestimmten Deichselwinkels (16) eine vorbestimmte Antriebslaufdauer zugeordnet ist.

7. Lenkanordnung nach Anspruch 5 oder 6, dadurch gekennzeichnet, daß einer Folge von bestimmten Deichselwinkelwerten entsprechend abgestufte Änderungsbeträge zum Zusatzwinkel (36) zugeordnet sind.

8. Lenkanordnung nach einem der Ansprüche 1 bis 3 oder 5 bis 7, dadurch gekennzeichnet, daß einer vorbestimmten Deichselwinkelgeschwindigkeit ein vorbestimmter Änderungsbetrag zum Zusatzlenkwinkel (36) zugeordnet ist.

9. Lenkanordnung nach einem der Ansprüche 5 bis 8, dadurch gekennzeichnet, daß eine ständige Veränderung des Zusatzlenkwinkels vorgesehen ist, solange ein vorbestimmter Deichselwinkelwert über- bzw. unterschritten ist.

10. Lenkanordnung nach einem der Ansprüche 4 bis 9, dadurch gekennzeichnet, daß einem Deichselwinkelwert, dem eine Vergrößerung des Zusatzlinkwinkels zugeordnet ist, eine Einrichtung zum Feststellen einer der Vergrößerung des Zusatzlenkwinkels folgenden Verringerung des Deichselwinkels vorgeschaltet ist, der beim Erreichen eines vorbestimmten Wertes der Verringerung des Deichselwinkels eine Verringerung des Zusatzlenkwinkels zugeordnet ist.

11. Lenkanordnung nach Anspruch 10, dadurch gekennzeichnet, daß dem Unterschreiten eines vorbestimmten Deichselwinkelwertes ein vorbestimmter Verringerungsbetrag des Zusatzlenkwinkels zugeordnet ist.

12. Lenkanordnung nach Anspruch 10, dadurch gekennzeichnet, daß einer vorbestimmten Deichselwinkelgeschwindigkeit ein vorbestimmter Verringerungsbetrag des Zusatzlenkwinkels zugeordnet ist.

13. Lenkanordnung nach einem der Ansprüche 1 bis 12, dadurch gekennzeichnet, daß eine diskontinuierlich wiederholte Nachstellung der Zusatzlenkeinrichtung in vorbestimmten Zeit- oder Streckenabständen vorgesehen ist.

14. Lenkanordnung nach einem der Ansprüche 1 bis 13, dadurch gekennzeichnet, daß bei niedriger Geschwindigkeit der geringste Deichselwinkelwert, der zu einem Zusatzlenkvorgang führt, geringer ist als bei höherer Geschwindigkeit.

15. Lenkanordnung nach einem der Ansprüche 1 bis 14, dadurch gekennzeichnet, daß eine Einrichtung (22) zum Feststellen des Winkels zwischen der Deichselrichtung und der Anhängerlängsrichtung vorgesehen ist und daß die Zusatzlenkeinrichtung in winkelneutraler Stellung abgeschaltet ist, solange dieser Winkel unterhalb eines vorbestimmten Betrags liegt.

16. Lenkanordnung nach einem der Ansprüche 1 bis 15, dadurch gekennzeichnet, daß bei Rückwärtsfahrt die Zusatzlenkeinrichtung abgeschaltet ist.

17. Lenkanordnung nach einem der Ansprüche 1 bis 16, dadurch gekennzeichnet, daß die Zusatzlenkeinrichtung manuell verstellbar ist.

18. Lenkanordnung nach Anspruch 17, dadurch gekennzeichnet, daß eine Handhabe zum manuellen Verstellen der Zusatzlenkeinrichtung am Fahrerstand vorgesehen ist.

19. Lenkanordnung nach Anspruch 17 oder 18, dadurch gekennzeichnet, daß die manuelle Verstellbarkeit der Zusatzlenkeinrichtung oberhalb einer vorbestimmten Geschwindigkeit selbsttätig abgeschaltet ist.

20. Lenkanordnung nach einem der Ansprüche 1 bis 19, dadurch gekennzeichnet, daß die Zusatzlenkeinrichtung vom Lenkwinkel des Zugfahrzeugs beeinflußbar ist.

Fig.1

# Fig. 2

# EUROPÄISCHER RECHERCHENBERICHT

Europäisches Patentamt

0126387
Nummer der Anmeldung

EP 84 10 5284

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | DE-A-3 030 279 (M.A.N. AG) * Anspruch 1; Figuren 1, 2 * | 1 | B 62 D 13/00 |
| A | EP-A-0 066 269 (K. KÄSSBOHRER FAHRZEUGWERKE GMBH) * Ansprüche 1, 2; Figur 3 * & DE-A1- 3 121 745 (Kat. D) | 1 | |
| A | DE-A-2 948 181 (G. AUWÄRTER GMBH & CO.) * Ansprüche 1, 4, 9, 10,12 * | 1,2,15 -17 | |
| A | DE-A-3 139 349 (DAIMLER-BENZ AG) | | |
| A,D | DE-A-2 808 173 (FA. ACKERMANN-FRUEHAUF) | | |
| A | DE-A-1 957 662 (W. HUNGER) | | |

RECHERCHIERTE SACHGEBIETE (Int. Cl. 3)

B 62 D 13/00
B 62 D 15/00

Der vorliegende Recherchenbericht wurde für alle Patentansprüche erstellt.

| Recherchenort | Abschlußdatum der Recherche | Prüfer |
|---|---|---|
| BERLIN | 01-08-1984 | PETTI P |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82